# EUROPEAN PATENT SPECIFICATION

(11) **EP 0 395 585 B1**
(45) Date of publication and mention of the grant of the patent: **27.07.1994**
(21) Application number: 90810310.4
(22) Date of filing: 19.04.1990
(51) Int. Cl.: B29C 51/16, B29C 61/02

(54) **Method of manufacturing labeled objects. method of manufacturing labelled containers utilizing said method, and labeling preformer apparatus for use in carrying out the method**
Verfahren zum Herstellen von etikettierten Artikeln, Verfahren zum Herstellen von etikettierten Behältern nach diesem Verfahren und Vorrichtung zum Vorformen von Etiketten zur Anwendung bei der Ausführung dieses Verfahrens
Procédé de fabrication d'objets étiquetés, procédé de fabrication de récipients étiquetés selon ce procédé, et dispositif de préformage d'étiquettes pour la mise en oeuvre du procédé

(30) Priority: 28.04.1989 JP 111262/89; 20.10.1989 JP 274720/89
(43) Date of publication of application: 31.10.1990
(73) Proprietor: FUJI SEAL INDUSTRY CO. LTD., Osaka-shi (JP)
(72) Inventor: Taki, Junji, c/o Osaka Branch, Chuoh-ku, Osaka-shi (JP); Omori, Shoichi, c/o Osaka Branch, Chuoh-ku, Osaka-shi (JP); Imanishi, Hideaki, c/o Kabushiki Kaisha Fuji Seal, Chiyoda-ku, Tokyo-to (JP); Nagata, Kazuhiko, c/o Kabushiki Kaisha Fuji Seal, Chiyoda-ku, Tokyo-to (JP)
(74) Representative: Baggiolini, Raimondo

(56) References cited:
- DE-A- 2 250 638
- DE-A- 2 547 814
- DE-A- 3 409 249
- DE-B- 1 266 956
- FR-A- 2 110 231
- FR-A- 2 209 657
- FR-A- 2 229 612
- FR-A- 2 338 191
- PATENT ABSTRACTS OF JAPAN, vol. 6, no. 14 (M-108)[892], 27th January 1982;& JP-A-56 133 120 (MITSUBISHI JUSHI K.K.) 19-10-1981

## Description

### BACKGROUND OF THE INVENTION

### 1. Field of the Invention

This invention relates to a method for manufacturing a synthetic resin molded article, principally in the form of a container, having a label affixed to the outer periphery thereof, and an apparatus for use in carrying out the method.

### 2. Description of Background Art

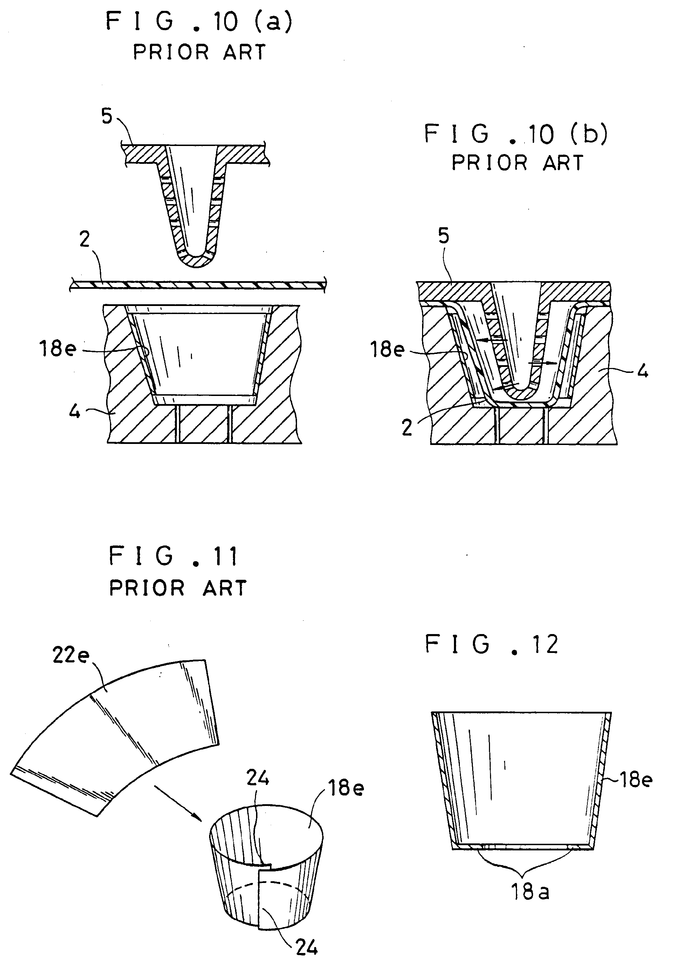

Hitherto, it has been known to manufacture a labeled container by employing means as, for example, shown in FIG. 10.

This prior art means is of such arrangement that a label 18e made of paper or similar material is inserted into a molding die 4 as shown in FIG. 10 (a), then a resin sheet 2 is forced into the die 4 by means of a plug 5, as shown in FIG. 10 (b), for being formed into a container configuration. According to such arrangement, it is possible to allow the label 18e to be integrally affixed to the outer periphery of a container simultaneously with the container being formed, whereby a series of manufacturing operation involved can be simplified.

In such operation, if the label 18e is to be slightly held in close contact with the side of the container, it is necessary that the label 18e is precisely precontoured to the interior of the die 4. For cutting and shaping the label 18e, therefore, it has been usual practice to arrange so that, if the interior of the die 4 is of truncated conical shape, for example, a sheet material 22e punched to a desired sectorial shape as shown in FIG. 11 is rolled to shape and locked at both ends 24, 24 into unity.

With the above described prior art means of fabrication, however, it is very difficult to shape the planar sheet material 22e (by rolling or otherwise handling it into a three dimensional label of the desired size and configuration; such operation is very complicated, inefficient, and costly.

Furthermore, such manufacturing method makes it inevitable that production involves some dimensional variation and error, which in turn would often result in creases and looseness caused to the label affixed to the outer periphery of the container, or unsightly appearance of the container itself.

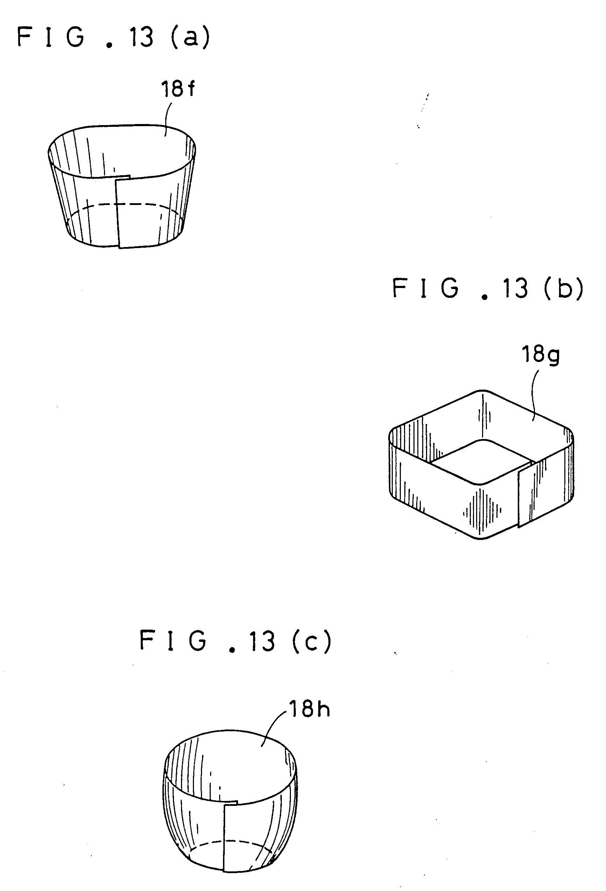

According to the prior art method, the variety of label shape which can be produced from one piece of sheet material is limited: the sheet material can be formed at the best into a label of truncated conical shape. It is extremely difficult to obtain a more complex label shape. For example, where it is required that the label 18e has bents 18a formed at its bottom portion as shown in FIG. 12, the prior art method cannot be applied. A similar problem arises where it is necessary to produce, for example, an elliptic label 18f, an angular label 18g having rounded corners, and a label 18h having a three dimensional curved surface, as shown in FIGS. 13 (a), (b), (c).

Therefore, it is a primary object of the invention to facilitate the process of molding synthetic resin into a resin article such as a labeled container wherein a label is previously inserted into a molding die, by employing simple operating means to enable the label to be accurately contoured to the desired size and shape conforming to the interior configuration of the molding die, thereby enabling proper and efficient production of labeled article in which the label is free from crease or the like.

### SUMMARY OF THE INVENTION

This invention is intended to solve the foregoing problems with the prior art by preforming a label inserted in a molding die to the desired size and shape by using heat shrinking means and not by mechanically bending the label or otherwise for being shaped to the size and configuration conforming to the interior of the die.

According to a first embodiment of the invention, a method is provided for manufacturing a labeled article wherein a preformed label 18 is first inserted into a molding die 4 along the inner surface thereof and then hot melt or heated and softened synthetic resin 2 is molded to the interior shape of the molding die 4 so that the label 18 is integrally formed with the synthetic resin 2,
characterized in that said preformed label 18 is of a heat shrinkable material and, prior to being inserted into the molding die 4, the label 18 is fitted over a preformer die 7 having an outer periphery 7a corresponding in size and shape to the inner periphery 4a of the molding die 4 and heat-shrunk for being preformed to the size and shape conforming to the outer periphery 7a of said preformer die 7.

According to a second embodiment of the invention, a method is provided for manufacturing a labeled article using the above method, characterized in that during the process of heat shrinking the preformed label 18 fitted over the preformer die 7, one end of the label 18 is shrunk along an end portion 7b of the preformer die 7 which is formed to a size and shape conforming to the size and shape of an inner bottom portion 4b of the molding die 4, whereby to create inwardly oriented bends 18a at one end of the label 18, said bends 18a being positioned at the bottom of the molded synthetic resin 2 as a container.

According to another embodiment of the invention, a labeling preformer apparatus is provided for carrying out the above methods, comprising a preformer die 7 including an outer periphery 7a contoured to the size and shape conforming to at least the inner periphery 4a of the molding die 4, and a label heating device 17 for heating and shrinking a preformed label 18 fitted over said preformer die 7.

According to another embodiment of the invention, in said labeling preformer apparatus, the preformer die 7 is cyclically movably mounted on a conveyor 8, and the conveyor 8 is so arranged that the preformer die 7 can be turned upside down at a location downstream of the position of a label heating device 17 so that the label 18 fitted over the preformer die 7 and heated and shrunk by the label heating device is allowed to fall into the molding die 4 disposed under the conveyor 8.

In the first mentioned method, the label 18 fitted over the preformer die 7 for being heated and shrunk is preformed as a label 18 having a size and shape just conforming to the outer periphery 7a of the preformer die 7, with little or no dimensional error.

The preformer die 7 is preset to the size and shape conforming to the inner configuration of the molding die 4, and accordingly the label 18 preformed to the size and shape of the preformer die 7 is subsequently accurately inserted in position along the inner surface of the molding die 4. Therefore, the label 18 is free from any crease or looseness due to dimensional error, and the resin 2 itself as a molding material is not liable to be affected in its molding performance by a label 18 inconsistent with the molding die 4, it being thus possible to obtain a molded article molded to the desired shape conforming to the interior configuration of the molding die 4.

Preforming of the label 18 is carried out by heat shrinking the tubular label 18 as fitted over the preformer die 7. The heat shrinking operation can be easily performed without involving any particular trouble. Especially where the label 18 is fabricated in tube form that is ready for being fitted over the preformer die 7, the label 18 may be simply cut to any size suitable for that purpose, no necessity being there for fabricating it precisely to the required size.

In the second mentioned method, when the label 18 is heat shrunk to conform to the preformer die 7, one end of the label 18 is bent inwardly to form a bend 18a. Therefore, by inserting such label 18 into the molding die 4 in connection with container molding, it is possible to manufacture a labeled container of the type in which a bent 18a of the label 18 is present at the bottom of the container, such a container having hitherto been considered extremely difficult to produce.

Where the label preformer apparatus is employed, after a tubular label 18 is fitted over the preformer mold 7, the label 18 is heated by the label heating device 17 for being preformed into the required size and shape. Therefore, the apparatus can be advantageously employed in carrying out the method of manufacturing a labeled container according to the invention.

Further, according to the arrangement wherein the preformer die 7 is cyclically moved by means of a conveyor 8 so that the preformer die 7 can be turned upside down at and after a location past the position of the label heating device 17, the label 18 which has passed through the process of heat shrinking and preforming can be allowed to drop directly into the molding die 4 disposed under the conveyor 8 for insertion into position.

As described above, according to the invention, a label of a heat shrinkable material is used and, before the label is inserted into the moding die, the label is heat shrunk to be preformed to conform to the preformer die set to the size and shape conforming to the inner periphery of the molding die. Therefore, the label so preformed has the desired size and shape conforming accurately to the inner periphery of the container molding die, and thus subsequent container molding operation involves no occurrence of such label crease or slack due to dimensional errors of the label itself as has often been encounterd in the past, or no possibility of the container formed being adversely affected by such error of the label so that it is of unsightly appearance. Accordingly, it is possible to obtain a beautiful labeled article and, in addition, for label preforming, no particular care is required to ensure that the label be accurately contoured to the interior configuration of the die, it being only necessary to make the label in such a tube form that can be fitted over the preformer die.

As such, label forming operation prior to the insertion of the label into the molding die can be considerably simplified to enable labels to be easily manufactured; and at same time labeled products can be manufactured at relatively low cost.

More particularly, the invention makes it possible to insert a label in place in connection with the manufacture of resin products having three dimensional surfaces, such as spherical or the like, without crease and with sightly effect, which has hitherto been considered extremely difficult. Thus, the invention can be advantageously employed in various kinds of labeled articles.

According to the arrangement of the invention for shrinking one end of the lable to conform to a specified one end of the preformer die when the label is preformed by heat shrinking to conform to the preformer die, one end of the label is inwardly bent to form a bend. Therefore, by carrying out container molding while inserting the label so preformed into the container molding die, it is possible to manufacture a labeled container having high strength characteristics in which a bent portion of the label is present at the bottom of the container, such a container having hitherto been considered to be extremely difficult to manufacture.

Further, according to the label preforming apparatus of the invention which comprises a preformer die and a label heating device, after a tubular label is fitted over the preformer device, the label is heated by the label heating device, being thereby preformed to the required size and shape. This provides a suitable and practical apparatus for carrying out the method of manufacturing a labeled container according to the invention.

According to the arrangement of the invention such that the preformer die is cyclically movable on the conveyor so that the preformer die can be turned upside down when it has passed the location of the label heating device, the label which has been heat shrunk and preformed is allowed to drop directly into the container molding die disposed under the conveyor, which permits smooth and quick shifting from the stage of label preforming to the stage of container molding to thus ensure improved operating efficiency with respect to a series of operation involved.

### BRIEF DESCRIPTION OF THE DRAWINGS

FIG. 1 is an explanatory view showing by way of example an apparatus for manufacturing a labeled container in accordance with the invention;
FIG. 2 (a) is a fragmentary sectional view showing by way of example a preformer die; FIG. 2 (b) is a sectional view showing by way of example a molding die;
FIG. 3 is a label in a condition prior to its being preformed; FIG. 3(a) is a sectional view thereof; FIG. 3(b) is a perspective view showing the stage of fabrication thereof;
FIG. 4 is sectional view showing label preforming operation;
FIG. 5 is a fragmentary sectional view showing the operation of inserting the label into the molding die;
FIGS. 6(a), (b), (c), and (d) are sectional views showing stages of labeled container manufacturing;
FIG. 7 is a sectional view showing a manufactured labeled container;
FIGS. 8(a), (b), (c), (d) are explanatory views showing another embodiment of the invention;
FIG. 9 illustrates another embodiment of the invention in which the injection molding technique is applied; FIG. 9(a) being a sectional view as in the stage of preforming; FIG. 9(b) being a sectional view as in the stage of injection molding; and FIG. 9(c) being a partially cutaway sectional view in perspective of a product as manufactured;
FIGS. 10 and 11 illustrate prior art arrangements; FIG. 10(a) and 10(b) being fragmentary sectional views; and FIG. 11 being a perspective view showing the stage of label forming; and
FIGS. 12 and 13 illustrate other forms of labels; FIG. 12 being a sectional view; and FIGS. 13 (a), (b), (c) being perspective views.

### DESCRIPTION OF THE PREFERRED EMBODIMENTS

Some embodiments of the invention will now be described.

### (Embodiments of Apparatus)

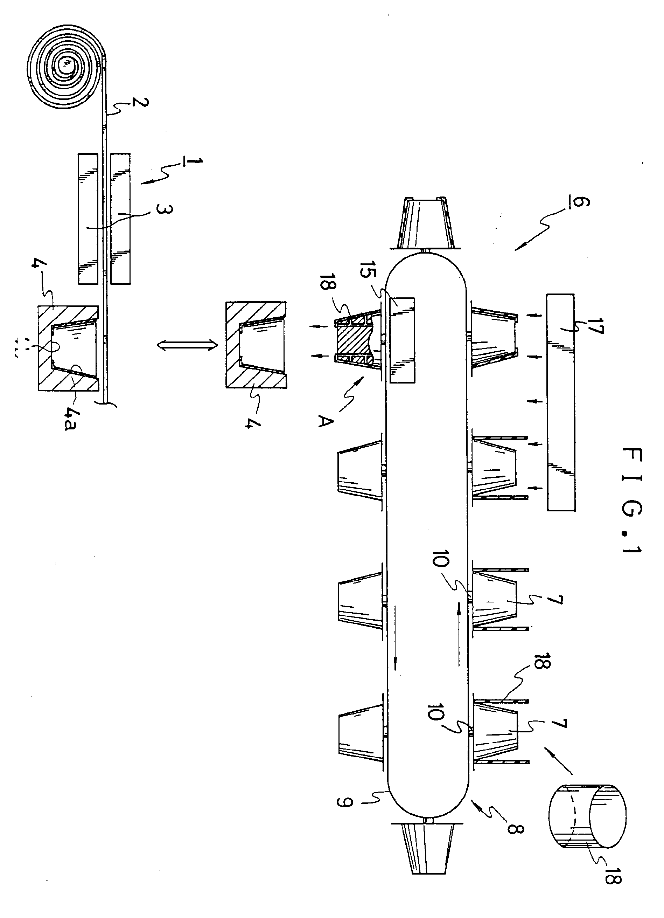

Arrangement of the apparatus will be first described. In FIG. 1, numeral 1 generally designates a known container molding apparatus which includes a heater 3 for heating a resin sheet 2, a molding die 4 as a female mold, and parts such as a pressure forming plug and a blanking blade which will be hereinafter described.

Numeral 6 designates a label preforming apparatus provided as an operating stage prior to the container molding apparatus 1. Referring to the apparatus 6, numeral 7 designates preformer dies mounted at a predetermined pitch to a cyclically movable belt 9 of a conveyor 8 at a plurality of locations through attachments 10.

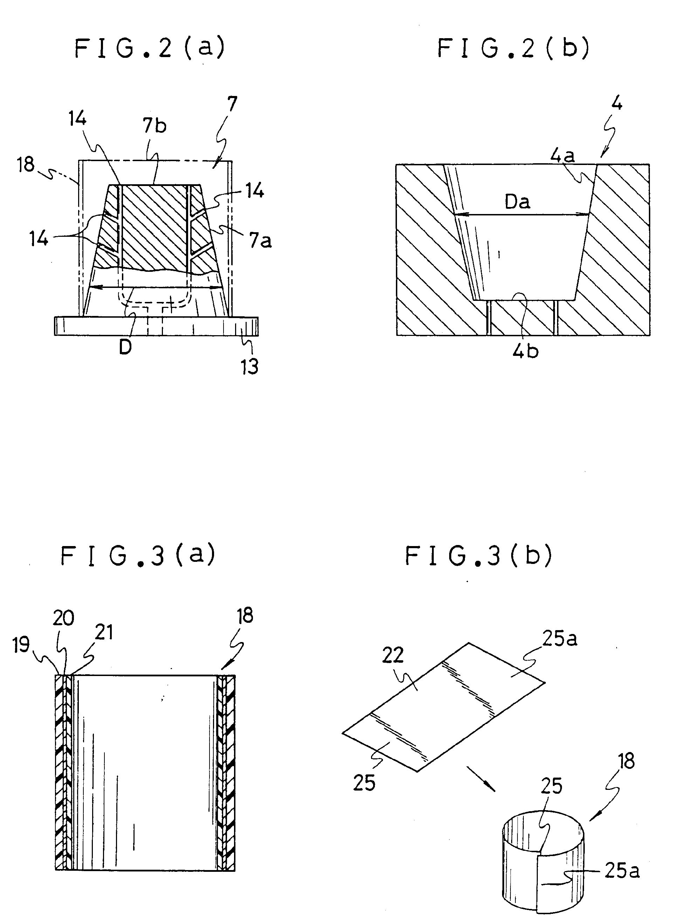

Each preformer die 7, as shown in FIG. 2(a), is arranged so that an outer periphery 7a defined above a collar shaped base plate 13 of the die 7 and a front end portion 7b correspond respectively to an inner periphery 4a and an inner bottom portion 4b of the molding die 4 shown in FIG. 2 (b). The outer diameter D of the preformer die 7 is set to be smaller than the inner dimension Da of the container molding die 7 by a value corresponding to the thickness of a label 18 which will be described hereinafter. The outer periphery 7a and front end portion 7b of the preformer die 7 are embossed or silicon treated so as to provide good releasing characteristics relative to any material having adhesivity. Numeral 14 designates air discharge holes suitably bored in the upper end portion 7b and outer periphery of each preformer die. Numeral 15 designates a compression air supply unit for supplying compression air into the preformer die 7 so that air is discharged through the air discharge holes bored in the preformer die 7 when the preformer die 7 has reached a position A at the underside of the conveyor 8 as shown in FIG. 1.

Numeral 17 designates label heating devices disposed at one side, or both at one side and above, an upper side conveyor pair of the conveyor 8 at a downstream location thereof, for which a far infrared radiating ceramic heater or hot air blower or the like may be employed.

### (Examples of Manufacturing Method)

Nextly, the method of manufacturing a labeled container by employing the above described arrangement will be explained.

A label 18 of the type as shown in FIG. 3 is first prepared. The label 18 is comprised of a heat-shrinkable synthetic resin film 19, e. g., of stretched polypropylene, having on its inner surface a print layer 20 bearing product description or the like and further on the inner surface a heat sensitive adhesive layer 21 formed by chrolinated polypropylene resin coating or otherwise.

The label 18 may be simply formed into a suitable tubular shape by joining both ends 25, 25a of a rectagular sheet 22 as shown in FIG. 3(b). Even if the interior of the molding die 4 is inverted truncated cone shaped, the label need not be of similar configuration; the label may be formed into a tube shape having a larger diameter.

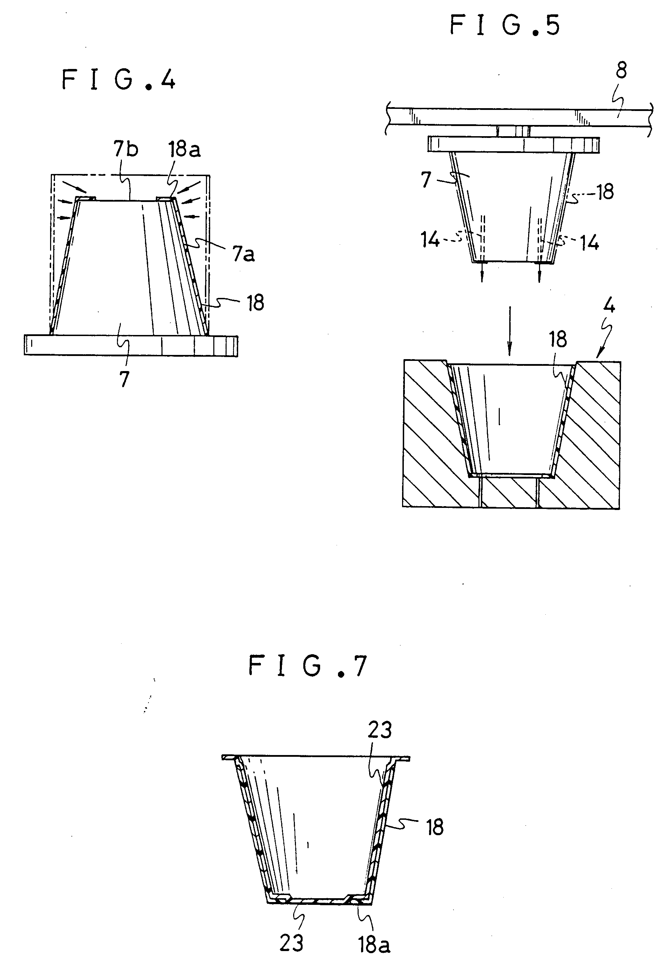

After a tubular label 18 is fitted over each preformer die 7 as it is delivered forward on the conveyor 8 of the preforming apparatus 6, the label 18 as so fitted is transported to the location of the heating device 17 for heating, whereby shrinkage is caused to the label 18 the base material of which is a heat shrinkable film 19 so that, as FIG. 4 shows, the label 18 is preformed to conform to the taperered configuration of the outer periphery 7a of the preformer die 7. Through this stage of preforming the label 18 can be precisely contoured to the size and shape of the preformer die 7. Further, by setting the height of the label 18 to be larger than that of the preformer die 7, an upper portion of the label 18 is inwardly bent along the front end portion 7b of the preformer die 7 under heat shrinking action thereof, a bent portion 18a being thus formed.

After completion of the preforming stage as above described, the label 18 is inserted into the molding die 4. For this purpose, the molding die 4 is previously transferred from the container molding apparatus 1 to a location right under position A of the conveyor 8 as shown in FIG. 1, so that when the label 18 is transferred to the position A, the label 18 is caused to fall directly into the molding die 4. At the position A, the preformer die 7 is turned upside down with its lower side sized diametrally smaller, and in addition, the surface of the preformer die 7 provides good release characteristics because it is embossed or silicon treated; therefore, the label 18 can be easily removed for falling by itself.

By discharging air through the air discharge holes 14 of the preformer die 7, operation for release of the label 18 can be automatically forcibly carried out.

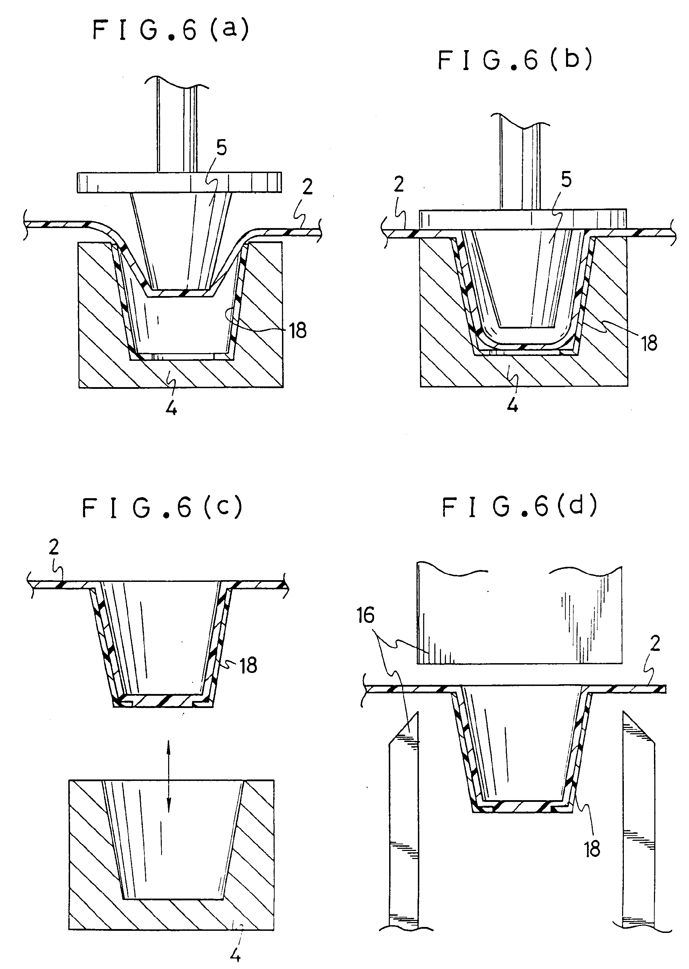

Subsequently, each molding die 4 into which the label 18 has been inserted is transferred to the container molding apparatus 1 for package molding as shown in FIG. 1. For this operation, known packaging forming means may be applied. A thermoplastic resin sheet 2 heated and softened by heaters 3 is first disposed above the molding die 4, and then as shown in FIG. 6(a) the resin sheet 2 is pushed downward by a plug 5 for entry into the label 18. Subsequently, the resin sheet 2 is radially dilated as shown in FIG. 6(b) through compressed air supply (for which heated air is used as requred) from the plug 5 and concurrently by drawing a vacuum with respect to the interior of the molding die 4, for molding to conform to the interior configuration of the molding die 4. The label 18 is accurately and firmly brought in adhesion contact through its interopr heat sensitive adhesive layer 21 with the resin sheet 2 formed into a container. Then, as shown in FIGS. 6(c), 6(d), the molded resin 2 is removed from the molding die 4 and cut into separate containers by the blanking blade 16.

The label 18 previously inserted into the molding mold 4 is one preformed to a size and shape conforming to the interior of the molding die 4. Therefore, the label 18 involves no undue gap with the resin sheet 2 molded along the interior configuration of the molding die 4 and thus the outer surface of the label 18 is flush at all portions with the resin sheet 2. The label 18 is not liable to any appreciable crease or slack, and in no case can dilation molding of the resin sheet 2 be unduly restricted by the label 18.

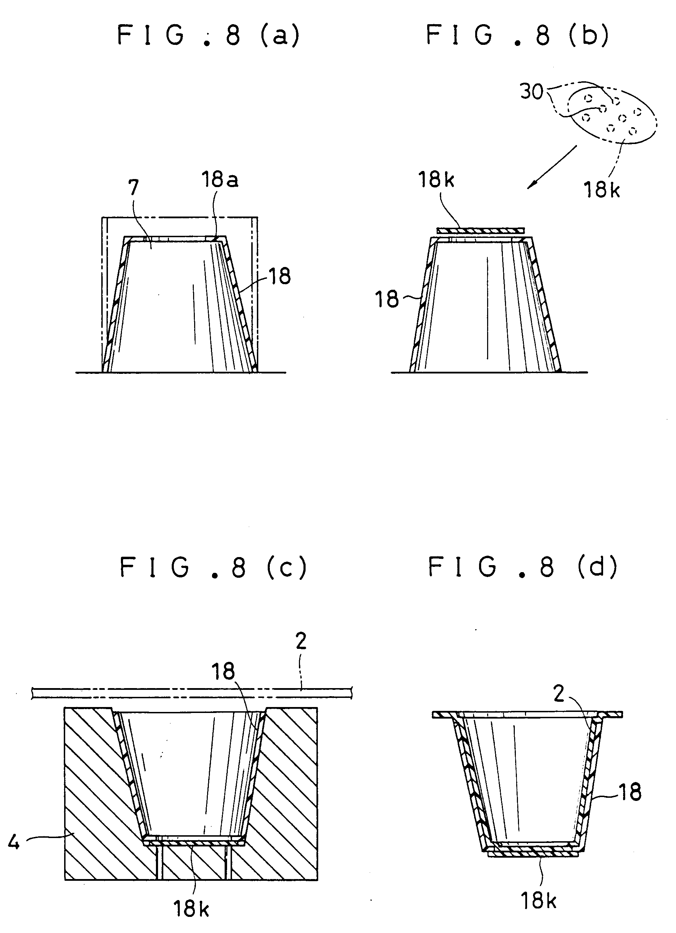

The labeled container manufactured in manner as above mentioned is such that, as a matter of course, the label 18 is affixed to the outer periphery of a container body 23 in flush relation thereto as shown in FIG. 7, and in addition, a bend 18a of the label 18 is positioned on the bottom 23a of the container body 23a in flush relation thereto as well. In such a container, the container body 23 is reinforced by a monolithic label 18 placed over an outer peripheral surface extending from the bottom 23a and, therefore, the strength of the container is considerably increased. As such, even though the container body 23 is made of a resin material with no particular strength advantage, its thickness can be reduced, which can contribute to resource saving. Since the bend 18a of the label 18 is flush with the bottom 23a of the container body 23, the bend 18a is unlikely to catch any irregularity on a table or cause a damage thereto if it is drawn over the table.

However, according to the invention, such a bend 18a is not necessarily provided on the label 18 as in the above described embodiment. The label 18 may be formed simply as a tubular label 18 placed over the outer periphery of the container body as shown in FIG. 10.

In the foregoing embodiment, the label 18 is formed of a stretched polypropylene material; but other materials, such as polystyrene, polyethylene, polyvinyl chloride, polyester, expanded polystyrene, and expanded polypropylene, may be similarly employed. Further, in order to add heat insulation characteristics to the label and in turn to the container, the label 18 may include an intumescent coating of an intumescent ink containing a microcapsule which will expand upon heating, as provided, for example, between the print layer 20 and the adhesive layer 21 in FIG. 3, not to mention the use of foamed thin sheets, such as, expanded polystyrene and expanded polypropylene. In this case, the position at which such intumescent coating is provided is not limited to the above noted one and may be changed as required. Means for provision of such heat insulating characteristics are not limited to the one mentioned above and, of course, any other suitable means may be employed.

An arrangement as shown in FIG. 8 may be made. That is, after a bend 18a is formed at the upper end of the label 18 as shown in FIG. 8(a), an auxiliary label 18k formed of a separate material is affixed on top of the label 18 as shown in FIG. 8(b), and then the label 18 is integrally combined with the resin sheet 2 as shown in FIGS. 8(c) and (d). This means provide an advantage that the label 18 is placed over the entire bottom surface of the resin sheet formed into the container so that the heat insulation and strength of the container can be further improved. The auxiliary label 18k may be provided with perforations 30 so as to cause no inconvenience to vacuum drawing operation within the container molding die 4. For the purpose of such arrangement, means other than preforming are employed to a certain extent, and it is understood in this connection that the invention embraces such means within its technical scope.

In the present invention, the configuration of each molding die 4 and/or preforming die is not limited to the one earlier described, nor is the way of resin forming limited to the one using a resin sheet as described with respect to the embodiment.

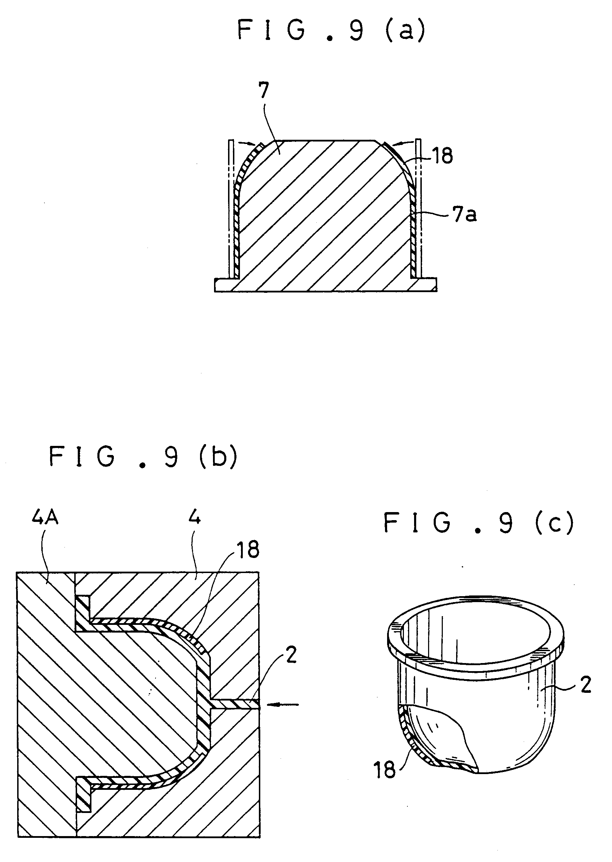

For example, such injection molding technique as shown in FIG. 9 may be employed. In this case, as FIG. 9(b) shows, a pair of injection molding dies 4, 4A, female and male, are used, in which with the label 18 inserted into the female die 4 along the inner periphery thereof, molten resin is injected into the cavity of the dies 4, 4A for molding. According to the invention, even in case of injection molding, by previously heat-shrinking a tubular label 18 fitted over a preformer die 7 having an outer periphery 7a of same size and shape as the inner periphery 4a of the female die 4 as shown in FIG. 9(a), it is possible to cause the label 18 to accurately conform to the inner periphery 4a of the female die 4.

Therefore, even if the outer surface of the resin 2 formed into the container by injection molding has a three dimensional curved surface, e. g., spherical, the label 18 can be finished to such a sightly appearance without any crease as shown in FIG. 9(c).

As it may be appreciated, according to the invention, resin molding means to be employed after preforming of the label is not particularly specified. Any method of resin molding by employing the molding die 4 after insertion in place of the tubular lebel 18 along the interior surface of the molding die 4 may be employed.

In the method claimed in claim 1, the molded object is not limited to a container. The invention is applicable as well to various kinds of resin-made objects other than containers. Needless to say, therefore, the configuration and other particulars of the molding die 4 used are not limited.

The preformer die 7 used in the invention is required to have an outer periphery 7a of such size and shape to at least conform to the inner periphery 4a of the molding die 4, but its size and shape at other sites need not be in conformance to the interior of the molding die 4. The term "conformance" or "conform" referred to herein is not particularly limited to high precision conformace in size and shape. Any error within practically tolerable limits is permissible. The size of the preformer die 7 is such that it is smaller than the molding die 4 by a value corresponding to the thickness of the label 18, but wherever practically permissible, it is understood that it may be smaller by a value greater than the thickness of the label 18.

In the label preforming apparatus according to the invention, it is not always necessary to arrange that a plurality of preformer dies 7 are cyclically moved by the conveyor 8. The apparatus may comprise one preformer die 7 and one label heating device 17 only. The preformer die 7 may be stationarily desposed.

Particular arrangement of individual units of the apparatus may be varied in design as required.

For the purpose of turning the preformer die 7 upside down to allow the label 18 from the preformer die 7 into the molding die 4, it is of course possible to employ a device which mechanically grasps the outer surface of the label 18 to draw it down into the molding die 4, instead of providing air discharge holes 14 on the outer surface of the molding die 4 as in the above described embodiment.

## Claims

1. A method for manufacturing a labeled article wherein a preformed label (18) is first inserted into a molding die (4) along the inner surface thereof and then hot melt or heated and softened synthetic resin (2) is molded to the interior shape of the molding die (4) so that the label (18) is integrally formed with the synthetic resin (2), and wherein said preformed label (18) is of a heat shrinkable material (2) and, prior to being inserted into the molding die (4), the label (18) is fitted over a preformer die (7) having an outer periphery (7a) corresponding in size and shape to the inner periphery (4a) of the molding die (4) and heat-shrunk for being preformed to the size and shape conforming to the outer periphery (7a) of said preformer die (7).

2. A method of manufacturing a labeled article as set forth in claim 1, wherein after the label (18) is inserted in place along the inner periphery (4a) of the molding die (4) as a female mold, a resin sheet (2) of a thermoplastic material which has been heated and softened is molded into a container conforming to the inner surface of the molding die.

3. A method of manufacturing a labeled article as set forth in claim 1, wherein after the label (18) is inserted in place along the inner periphery (4a) of the female one of a pair of molding dies, molten synthetic resin is injected into the cavity of the molding dies for being formed into a container conforming to the cavity configuration of the molding dies.

4. A method of manufacturing a labeled article as set forth in claim 2 or 3, wherein during the process of heat shrinking the preformed label fitted over the preformed die (7), one end of the label is shrunk along an end portion of the preformer die which is formed to a size and shape conforming to the size and shape of an inner bottom portion of the molding die (46), whereby to create inwardly oriented bends at one end of the label, said bends being positioned at the bottom of the molded synthetic resin as a container.

5. A labeling apparatus for carrying out the method according to any one of the preceding claims, comprising at least one molding die (4) and one plug (5) apt to force a resin sheet (2) into the molding die (4) which contains a label inserted along the inner surface thereof, and further comprising at least one preformer die including an outer periphery (7a) contoured to the size and shape conforming to at least the inner periphery (4a) of the molding die, and a label heating device (17) for heating and shrinking a preformed label fitted over said preformer die.

6. A labeling preformer apparatus as set forth in claim 5, wherein the preformer die (7) is cyclically movably mounted on a conveyor (8), and wherein the conveyor (8) is so arranged that the preformer die (7) can be turned upside down at a location downstream of the position of a label heating device (17) so that the label fitted over the preformer die (7) and heated and shrunk by the label heating device (17) is allowed to fall into the molding die disposed under the conveyor (8).

## Patentansprüche

1. Ein Verfahren für die Herstellung eines etikettierten Artikels, wobei in dem Verfahren zunächst ein vorgeformtes Etikett (18) längs der inneren Oberfläche einer Gießform (4) in dieselbe eingeschoben wird, woraufhin heißgeschmolzenes oder erwärmtes und erweichtes Kunstharz (2) in die innere Form der Gießform (4) gegossen wird, so daß das Etikett (18) einteilig mit dem Kunstharz (2) ausgebildet wird, und wobei in dem Verfahren das vorgeformte Etikett (16) ein wärmeschrumpfbares Material (2) ist und vor dem Einschieben in die Gießform (4) über einer Vorformungs-Form (7) angebracht wird, deren äußere Umfangsfläche (7a) hinsichtlich der Größe und der Form der inneren Umfangsfläche (4a) der Gießform (4) entspricht, und wärmegeschrumpft wird, um in die Größe und die Form vorgeformt zu werden, die mit der äußeren Umfangsfläche (7a) der Vorformungs-Form (7) übereinstimmt.

2. Ein Verfahren für die Herstellung eines etikettierten Artikels gemäß Anspruch 1, bei dem nach dem Einschieben des Etiketts (18) in seine Lage längs der inneren Umfangsfläche (4a) der als Matritze dienenden Gießform (4) eine Harzfolie (2) aus einem thermoplastischen Material, das erwärmt und erweicht worden ist, in einen Behälter gegossen wird, der mit der inneren Oberfläche der Gießform übereinstimmt.

3. Ein Verfahren für die Herstellung eines etikettierten Artikels gemäß Anspruch 1, bei dem nach dem Einschieben des Etiketts (18) in seine Lage längs der inneren Umfangsfläche (4a) der Matritze des Paars von Gießformen geschmolzenes Kunstharz in den Hohlraum der Gießformen eingespritzt wird, um zu einem Behälter geformt zu werden, der mit der Hohlraumkonfiguration der Gießformen übereinstimmt.

4. Ein Verfahren für die Herstellung eines etikettierten Artikels gemäß Anspruch 2 oder 3, bei dem während des Prozesses der Wärmeschrumpfung das vorgeformte Etikett über der Vorformungs-Form (7) angebracht wird, wobei ein Ende des Etiketts längs eines Endbereichs der Vorformungs-Form geschrumpft wird, der eine Größe und eine Form besitzt, die mit der Größe und der Form eines inneren Bodenbereichs der Gießform (7b) übereinstimmt, wobei für die Erzeugung von nach innen gerichteten Winkelstücken an einem Ende des Etiketts diese Winkelstücke am Boden des als Behälter dienenden gegossenen Kunstharzes angeordnet werden.

5. Eine Etikettiervorrichtung für die Ausführung des Verfahrens gemäß einem der vorangehenden Ansprüche, mit wenigstens einer Gießform (4) und einem Stempel (5), der geeignet ist, eine Harzfolie (2) in die Gießform (4) zu zwingen, die ein längs ihrer inneren Oberfläche eingeschobenes Etikett enthält, und ferner mit wenigstens einer Vorformungs-Form, die eine äußere Umfangsfläche (7a) besitzt, deren Größe und Form wenigstens mit der inneren Umfangsfläche (4a) der Gießform übereinstimmt, und einer Etikett-Erwärmungseinrichtung (17) zum Erwärmen und Schrumpfen eines über der Vorformungs-Form angebrachten, vorgeformten Etiketts.

6. Eine Etikettierungs-Vorformungsvorrichtung gemäß Anspruch 5, bei der die Vorformungs-Form (7) zyklisch beweglich an einer Fördereinrichtung (8) angebracht ist und bei der die Fördereinrichtung (8) so beschaffen ist, daß die Vorformungs-Form (7) an einer Stelle hinter der Position einer Etikett-Erwärmungseinrichtung (17) umgedreht werden kann, so daß das über der Vorformungs-Form (7) angebrachte und von der Etikett-Erwärmungseinrichtung (17) erwärmte und geschrumpfte Etikett in die unter der Fördereinrichtung (8) angeordnete Gießform fallen kann.

## Revendications

1. Procédé de fabrication d'un article étiqueté dans lequel on introduit d'abord une étiquette préformée( 18) dans une matrice de moulage (4) le long de la surface interne de celle-ci, puis on moule de la résine synthétique (2) fondue chaude ou chauffée et ramollie selon la forme intérieure de la matrice de moulage (4), de façon que l'étiquette (18) soit intégralement formée avec la résine synthétique (2), et dans lequel la dite étiquette préformée (18) est en un matériau thermo-rétractable et, avant son introduction dans la matrice de moulage (4) , l'étiquette (18) est ajustée sur une matrice de préformage (7), dont la périphérie extérieure (7a) correspond par sa dimension et par sa forme à la périphérie interne (4a) de la matrice de moulage (4), et est thermo-rétractée pour être préformée avec une dimension et une forme conformes à la périphérie extérieure (7a) de la dite matrice de préformage (7).

2. Procédé de fabrication d'un article étiqueté selon la revendication 1, dans lequel, après que l'étiquette (18) ait été mise en place le long de la périphérie interne (4a) de la matrice de moulage (4) en formant un moule femelle, on moule une feuille de résine (2), en un matériau thermoplastique qui a été chauffé et ramolli, pour former un récipient correspondant à la surface intérieure de la matrice de moulage.

3. Procédé de fabrication d'un article étiqueté selon la revendication 1 dans lequel, après que l'étiquette (18) ait été mise en place le long de la périphérie intérieure (4a) de la matrice de moulage femelle d'un couple de matrices de moulage, on injecte de la résine synthétique fondue dans la cavité des matrices de moulage pour lui donner la forme d'un récipient se conformant à la configuration de la cavité des matrices de moulage.

4. Procédé de fabrication d'un article étiqueté selon la revendication 2 ou 3 dans lequel, pendant le processus de thermo-rétraction de l'étiquette préformée ajustée sur la matrice de préformage (7), une extrémité de l'étiquette se rétracte le long d'une partie d'extrémité de la matrice de préformage présentant une dimension et une forme conformes à la dimension et à la forme d'une partie inférieure interne de la matrice de moulage (4b), de façon à créer à une extrémité de l'étiquette des retours orientés vers l'intérieur, ces retours étant placés à la base de la résine synthétique moulée pour constituer un récipient.

5. Appareil d'étiquetage pour la mise en oeuvre du procédé selon l'une quelconque des revendications précédentes, comprenant au moins une matrice de moulage (4) et un tampon (5) apte à forcer une feuille de résine (2) dans la matrice de moulage (4) qui contient une étiquette introduite le long de sa surface intérieure, et comprenant de plus au moins une matrice de préformage présentant une périphérie intérieure (7a) dont le contour a une dimension et une forme se conformant au moins à la périphérie intérieure (4a) de la matrice de moulage, et un dispositif de chauffage d'étiquette (17) pour chauffer et faire se rétracter une étiquette préformée ajustée sur la dite matrice de préformage.

6. Appareil d'étiquetage à préformage selon la revendication 5, dans lequel la matrice de préformage (7) est montée pour se déplacer de façon cyclique sur un transporteur (8), et dans lequel le transporteur (8) est disposé de façon que la matrice de préformage (7) puisse être retournée en un endroit situé en aval de l'emplacement d'un dispositif de chauffage d'étiquette (17), de sorte que l'étiquette ajustée sur la matrice de préformage (7), chauffée et rétractée par le dispositif de chauffage d'étiquette (17), peut tomber dans la matrice de moulage disposée sous le transporteur (8).
